Europäisches Patentamt

European Patent Office

Office européen des brevets

(11) Publication number: **0 496 125 A1**

## EUROPEAN PATENT APPLICATION

(21) Application number: **91200101.3**

(22) Date of filing: **21.01.91**

(51) Int. Cl.5: **C08L 23/06**, C08J 7/12

(43) Date of publication of application:
**29.07.92 Bulletin 92/31**

(84) Designated Contracting States:
**AT BE CH DE DK ES FR GB GR IT LI LU NL SE**

(71) Applicant: **THE PROCTER & GAMBLE COMPANY**
**One Procter & Gamble Plaza**
**Cincinnati Ohio 45202(US)**

(72) Inventor: **Blacker, Richard Simon**
**High Harefield Cottage, Ripon Road**
**Pateley Bridge, New Yorkshire HG3 5DG(GB)**

(74) Representative: **Canonici, Jean-Jacques et al**
**Procter & Gamble European Technical**
**Center N.V. Temselaan 100**
**B-1853 Strombeek-Bever(BE)**

(54) Improved antistatic system for polyethylene surfaces.

(57) Containers primarily considing of high density polyethylene (HDPE) and having an improved antistatic electrical characteristic are disclosed. In particular containers primarily considing of HDPE, comprising linear low density polyethylene (LLDPE) and antistatic agents, and which have undergone surface oxidizing treatment, are disclosed.

EP 0 496 125 A1

Containers made of high density polyethylene (HDPE) and having an improved antistatic electrical characteristic are disclosed. In particular containers made of HDPE comprising linear low density polyethylene (LLDPE) and antistatic agents and which have undergone surface oxidizing treatment are disclosed.

Background of the invention

HDPE is a well known material in packaging particularly for containers. It has been used in a broad variety of packaging containers like for example boxes, barrels, bottles, cups, jars or bags. HDPE is used for packaging containers for its unique material characteristics and low cost. It offers very good physical and chemical stability and desirable properties used in the packaging industry. In particular it provides easy formability to many shapes as well as flexibility, low weight, environmental compatibility and other advantages. However, one drawback which has not been resolved satisfactorily so far is the accumulation of static charges on the surface of HDPE containers. This poses a problem in particular for the packaging industry. Electrical charges on the surface of HDPE containers tend to attract dust which accumulates on the surface of such containers. Also such electrical charges may cause problems in the handling of containers particularly when printing on them or during a labelling process.

This problem has been known for a long time in the industry and many ways to resolve it have been proposed. One particular way of addressing the problem is an oxidizing surface treatment of HDPE containers. Mostly flaming or electrical-discharge corona treatment are used. Even so the particular mechanism is not fully understood brief exposure of the container surface for example to a flame improves the antistatic characteristics.

Another well known and frequently practiced way of improving the static charge characteristics of the surfaces of HDPE containers is to use an antistatic agent. These antistatic agents are usually organic materials having a polar and an nonpolar end. Many antistatic agents fall under the groups of amides, amines, esters such as stearates, or quaternary ammonium compounds. Examples are lauric diethanol amide and aliphatic amines.

Other antistatics have been disclosed for example in EP-A 313 066 or in GB 2,078,760. Also many antistatic agents are commercially available but have not been disclosed in their chemical structure or formula.

To perform as designed the antistatic agent is usually incorporated at amounts around 1% by weight of the total material. Amounts below 0.1% have not been reported to work satisfactorily even so it is desirable to reduce the required amount of antistatic agents for economical reasons. Another problem with antistatic agents is that they have a performance profile over time. Some are known to display the desired antistatic performance only after several days but maintain it over a longer period. Other antistatic agents perform almost instantly but deteriorate more rapidly.

It has now been found that addition of linear low density polyethylene (LLDPE) in combination with very low levels of antistat and surface oxidizing treatment of HDPE-containers dramatically improves the antistatic behavior of such containers. It is believed that providing tertiary carbon atoms from the LLDPE which are oxidized, predisposes the container surface such that the antistatic agents are distributed evenly on the surface instead of accumulating in discrete areas or regions.

It is therefore an objective of the present invention to provide HDPE packaging containers with improved antistatic characteristics. It is further an objective of the present invention to reduce the amounts of antistatic agent necessary and to provide packaging containers with an even time profile of their antistatic performance. Yet, another aspect of the invention is to provide a process for the manufacture of HDPE containers with improved antistatistic characteristics.

Summary of the invention

According to the invention, containers are provided which primarily consist of high density polyethylene (HDPE-containers) comprising antistatic agents and further comprising linear low density polyethylene (LLDPE), and which have undergone surface oxidizing treatment. Preferred are HDPE-containers comprising LLDPE from 3% to 20% by weight of the container material and which have undergone surface oxidizing treatment.

If not stated otherwise all percentages are by weight of the container material.

Description of the invention

HDPE-containers can be made in almost any shape which is desired. The most common examples of such containers are bags, barrels, bottles, boxes, cups or jars. HDPE-containers, most often used in the

2

packaging industry, are described as bottles. However, the invention extends to any suitable HDPE-container subject to the following description.

Also containers are often required to be closable or reclosable or to incorporate means to facilitate or aid in the discharge of the containers. For the purpose of this invention such closures and discharge means are considered part of the container provided they are also made essentially of HDPE.

According to the invention containers are provided which are made of at least 75% high density polyethylene (HDPE-containers) further comprising linear low density polyethylene (LLDPE) and an antistatic compound and which have undergone surface oxidizing treatment. Preferably the amount of LLDPE is from 3% to 20%, more preferably from 5% to 10%. Compatibility of HDPE and LLDPE at any ratio has been evaluated in "Thermal Analysis of Polyethylene Blends" by N.K. Datta and A.W. Birley (Plastic and Rubber Processing and Applications 3, 1982, pages 237-245). In this disclosure the detrimental effect towards mechanical and other properties of HDPE compositions with other plastic materials, like for example polypropylene and low density polyethylene has also been shown.

The antistatic compound can be a single antistatic agent or mixtures of different antistatic agents. Mixtures of antistatic agents are preferred because they improve antistatic performance over time while lower quantities are required than with a single antistatic agent.

In general antistatic agents which are commercially available are suitable. Suitability of antistatic agents and the minimum required amounts can be readily defined by using the method described in the example hereinafter. The preferred amount of antistatic compound is at least 0.04% for mixtures of antistatic agents and at least 0.06% for single antistatic agents. Preferably the antistatic compound is a mixture of antistatic agents.

Optional ingredients of material which can be used for said HDPE-containers include lubricants, pigments, stabilizers, catalysts, process additives. Such optional ingredients can be present in a total amount of up to 5%. Impurities such as monomers may also be present in the finished containers herein.

It further is essential that said HDPE-containers undergo a surface oxidizing treatment. In particular electrical discharge corona treatment and flaming are useful surface oxidizing treatments. Flaming is especially preferred for HDPE-containers of self supporting strength, particularly bottles and jars.

Process

In the process aspect of the present invention the necessary steps are provided to allow the manufacture of HDPE-containers with improved antistatistic characteristics. This process comprises the steps of :
- mixing of the container material ingredients
- forming of containers
- exposing containers to a surface-oxidizing treatment

The mixing of the container material ingredients is preferably done with the ingredients in a molten or plasticized state. However, the mixing can also be done with the solid ingredients. Forming of containers strongly depends on the container design. For containers designed for storage of liquids most often blow molding or injection molding techniques are used. However, the forming of containers also includes constructing containers from individually supplied parts.

Examples

To evaluate the antistatic performance of polymeric containers, a rating method was used by which the antistatic performance of test samples is represented by values between 0 and 100 with 100 being the most and 0 being the least desirable antistatic performance rating. The following briefly describes the antistatic performance rating method.

Test samples of HDPE-container material are produced by mixing of the material compounds and using an extrusion blow molding technique. The test samples then undergo a surface oxidizing treatment by exposure to a flame (flame-treatment). All examples are prepared using identical preparation conditions.

The test samples are given a uniform and consistent charge using a non-contact method in an environment of constant relative humidity at constant temperature. The electrostatic behavior is monitored using a electrostatic fieldmeter (for example a John Chubb Electrostatic Fieldmeter). The following measurements are taken :

$V_R$ =     Surface voltage deposited by non-contact method
$V_0$ =     Surface voltage as first measured
$V_2$ =     Surface voltage at second minute
$V_4$ =     Surface voltage at fourth minute

EP 0 496 125 A1

$V_6$ = Surface voltage at sixth minute

Finally the antistatic performance rating (APR) is calculated using the following formula :

$$APR = 63.4\sqrt{1/V_O} + 23.3\left(\frac{V_B - V_O}{V_B}\right) + 8.6\left(\frac{V_O - V_6}{V_O}\right)$$

$$+ 3.2\left(\frac{V_O - V_2}{V_O}\right) + 1.2\left(\frac{V_2 - V_4}{V_2}\right) + 0.4\left(\frac{V_4 - V_6}{V_4}\right)$$

The measurement can be repeated after fixed time intervals to evaluate the antistatic performance over time.

Bottle shaped test samples were prepared using the following compositions and conditions (described in Table I).

4

## TABLE I

| % BY WEIGHT OF : | A | B | C | D | E | F | G | H | I | J | K | L | M | N | O |
|---|---|---|---|---|---|---|---|---|---|---|---|---|---|---|---|
| - AS1 | - | - | 0.09% | - | 0.09% | - | - | - | - | - | - | 0.09% | 0.09% | 0.09% | 0.09% |
| - AS2 | - | - | - | - | - | 0.06% | - | 0.06% | - | - | - | - | - | - | - |
| - AS3 | - | - | - | - | - | - | 0.06% | - | 0.06% | - | - | - | - | - | - |
| - AS4 | - | - | - | - | - | - | - | - | - | 0.04% | - | - | - | - | - |
| - AS5 | - | - | - | - | - | - | - | - | - | - | 0.04% | - | - | - | - |
| - LLDPE | - | - | - | - | 10% | - | - | 5% | 5% | 5% | 5% | 5% | - | - | - |
| - low density polyethylene | - | - | - | 8% | - | - | - | - | - | - | - | - | 10% | 20% | - |
| - polypropylene | - | - | - | - | - | - | - | - | - | - | - | - | - | - | 10% |
| - HDPE and minors | ———————————————————— to balance ——————————————————————— | | | | | | | | | | | | | | |
| - treatment condition : | | | | | | | | | | | | | | | |
| - flamed | - | yes | yes | yes | yes | yes | yes | yes | yes | yes | yes | yes | yes | yes | yes |
| - unflamed | yes | - | - | - | - | - | - | - | - | - | - | - | - | - | - |

The antistatic agents AS1 TO AS5 have the following compositions (described in Table II).

TABLE II

| AS1 | 0.09% of Coles[R]HAS30 |
| AS2 | 0.03% of Armostat[R]300 + 0.03% Coles[R] HAS30 |
| AS3 | 0.03% of Armostat[R]300 + 0.03% Lancrostat[R] LDN |
| AS4 | 0.02% of Armostat[R]300 + 0.02% Coles[R] HAS30 |
| AS5 | 0.02% of Armostat[R]300 + 0.02% Lancrostat[R] LDN |

The test samples were evaluated by the method described above for their antistatic performance rating. Tests were conducted at 65% relative humidity and 20°C yielding the following APR numbers over time (described in Table III).

TABLE III

| Day from Manufacture : <br> Test Bottle | 0 | 1 | 2 | 3 | 4 |
|---|---|---|---|---|---|
| A | 5 | 5 | 6 | 5 | 5 |
| B | 7 | 8 | 7 | 8 | 8 |
| C | 5 | 6 | 6 | 6 | 7 |
| D | 6 | 8 | 8 | 8 | 8 |
| E | 13 | 15 | 14 | 20 | 34 |
| F | 11 | 10 | 14 | 16 | 17 |
| G | 14 | 7 | 7 | 10 | 11 |
| H | 12 | 31 | 33 | 34 | 32 |
| I | 12 | 29 | 34 | 40 | 44 |
| J | 7 | 7 | 8 | 9 | 10 |
| K | 8 | 19 | 24 | 29 | 31 |
| L | 10 | 16 | 14 | 22 | 24 |
| M | 9 | 11 | 10 | 17 | 20 |
| N | 10 | 14 | 16 | 25 | 34 |
| O | 11 | 19 | 17 | 22 | 22 |

From these results it is apparent that HDPE-containers comprising an antistatic agent and further comprising LLDPE being flamed (surface oxidizing treatment) have a substantially better antistatic performance than other HDPE-containers. The HDPE/LLDPE combination is particularly effective when using combined antistatic systems.

**Claims**

1. Containers comprising
   - at least 75% by weight of the total container material of high-density polyethylene and
   - linear low-density polyethylene and
   - an antistatic compound,
   said containers having undergone a surface-oxidizing treatment.

2. The containers according to claim 1 characterized in that said high density polyethylene containers are bottles.

3. The containers according to any of the previous claims characterized in that said linear low-density polyethylene is present from 3% to 20% by weight of the total container material.

4. The containers according to any of the previous claims characterized in that said linear low-density polyethylene is present from 5% to 10% by weight of the total container material.

5. The containers according to any of the previous claims characterized in that the antistatic compound is a mixture of antistatic agents and present from 0.04% by weight of the total container material.

6. The containers according to any of the claims 1 to 4 characterized in that said antistatic compound is a single antistatic agent and present above 0.06% by weight of the total container material.

7. The containers according to any of the previous claims characterized in that said surface oxidizing treatment is an electrical discharge corona treatment or flaming.

8. The containers according to any of the previous claims characterized in that the surface oxidizing treatment is flaming.

9. Process for the manufacture of the containers of claim 1 comprising the following steps
   - mixing of the container material ingredients
   - forming of the container
   - exposing of the containers to a surface-oxidizing treatment

10. Process according to claim 10 characterized in that said container material compounds are mixed in molten or plasticized condition.

11. Process according to claim 9 or 10 characterized in that said forming of the containers is a blow molding or injection molding process

12. Process according to claim 9, 10 or 11 characterized in that said surface-oxidizing treatment is flaming.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-4 529 087 (R. NEAL ET AL)<br>Abstract<br>* column 2, line 17 - line 40 *<br>--- | 1-12 | C08L23/06<br>C08J7/12 |
| Y | EP-A-52 555 (BP CHIMIE)<br>Abstract<br>* page 3, line 8 - line 14 *<br>--- | 1-12 | |
| A | GB-A-2 206 890 (W. R. GRACE)<br>* page 7, line 6 - page 11, line 25 *<br>--- | 1 | |
| A | DATABASE WPIL, no. 86-045025[07U<br>DERWENT PUBLICATIONS Ltd, London,GB;<br>&JP-A-60262832(KOKUKU CHEM IND KK) 26-12-85<br>* abstract *<br>----- | 1 | |

|  |  |  | TECHNICAL FIELDS SEARCHED (Int. Cl.5 ) |
|---|---|---|---|
|  |  |  | C08L<br>C08J |

The present search report has been drawn up for all claims

| Place of search | Date of completion of the search | Examiner |
|---|---|---|
| THE HAGUE | 23 OCTOBER 1991 | GOOVAERTS R.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................
& : member of the same patent family, corresponding document

EPO FORM 1503 03.82 (P0401)